# EUROPEAN PATENT SPECIFICATION

(11) **EP 2 681 028 B1**
(45) Date of publication and mention of the grant of the patent: **03.12.2014**
(21) Application number: 12713313.0
(22) Date of filing: 27.02.2012
(51) Int. Cl.: B29C 45/16, B29K 21/00

(54) **METHOD OF MANUFACTURING TWO-COMPONENT THERMOSET-RUBBER OBJECT**
VERFAHREN ZUR HERSTELLUNG EINES ZWEIKOMPONENTEN-GEGENSTANDES AUS WÄRMEHÄRTENDEM KAUTSCHUK
PROCÉDÉ DE FABRICATION D'UN OBJET EN CAOUTCHOUC THERMODURCISSABLE À DEUX COMPOSANTS

(30) Priority: 28.02.2011 BE 201100138
(43) Date of publication of application: 08.01.2014
(73) Proprietor: B&P Products, 3900 Overpelt (BE)
(72) Inventor: GIELEN, Rik, 3910 Overpelt (BE)
(74) Representative: Caers, Raphael Frans Ivo
(86) International application number: PCT/IB2012/050890
(87) International publication number: WO 2012/117331

(56) References cited:
- WO-A2-2005/021231
- WO-A2-2008/003279
- DE-A1- 3 324 204
- JP-A- 2 103 110
- Saechtling 28. Ausgabe: "Kunststoff Taschenbuch", 2001, Carl Hanser, XP002677717, pages 771-772, page 771, third paragraph

## Description

### FIELD OF THE INVENTION

The present invention relates to objects which have to provide sufficient mechanical strength but also need to provide at some of their surfaces shock-absorbing or sealing properties and/or need to fulfil a closing function. More in particular, the invention relates to machine or construction parts, from for example pneumatic or hydraulic systems, wherein elastic seals are provided between the rigid parts to separate the contents of the entity, or the state thereof, from the environment of the entity.

### BACKGROUND OF THE INVENTION

From many parts proper mechanical properties are expected, but it is also expected that they also close or seal off properly at certain contact surfaces with other parts, for example, to keep the contents of the systems under pressure and/or avoid leakage of the contents to the environment. Such components may be found for example in hydraulic or pneumatic systems, in the chemical process technology, in vehicles, but also in more common home, garden, and kitchen utensils or appliances such as washing machines, vacuum cleaners, blenders and food processors.

Those parts are, due to the mechanical requirements, often made out of metal. For the sealing a separate rubber part is then usually provided, which is then provided between the surfaces with which two components come into contact with each other. To hold the rubber parts in place, recesses are quite often provided in the contact surfaces. The rubber components may for the same reason possibly also be glued to one of the contact surfaces.

This assembly technique implies that at the time of the assembly an additional component, in this case the rubber component, has to be provided. This additional component should for a correct fitting be located exactly at the prescribed position. Such additional components increase the complexity and degree of difficulty of the assembly, as well as the risk for problems and/or failures. Additional components require their own supply chains, may be lost or missing, and may possibly be assembled wrongly. In each of these cases this leads to problems at the assembly stage itself or jeopardizes the proper functioning of the whole.

To get around this problem, objects have been designed whereby a rubber component is integrated with a rigid part in the same object. For example, JP 02103110 A describes how an amount of a rubber composition is first injected by injection moulding through a first nozzle into the cavity of a mould with movable core and before the curing of the rubber, a thermosetting resin is injected through a second nozzle into the remaining free space in the mould, while pressing the core in a different position, after which the thermosetting resin is cured and the rubber is vulcanized at the same time. This method gives according to JP 02103110 A a very firm connection between the two materials of the shaped object, which makes the object suitable for oil seals in the engines of motorcycles. Also JP 63264322 A, JP 59202928 A and JP57084834 A describe similar objects manufactured by the insertion of a thermosetting resin and a rubber composition to be vulcanized into a casting or pressing mould, after which the resin is cured and the rubber is vulcanized at the same time. The problem with these two-component objects thus manufactured is that this method of production cannot ensure precise dimensions for the two parts, because deformation of the free surface of the firstly introduced component may occur during the introduction of the second component. The intermediate surface between the two parts, therefore, is not exactly defined. Because of the different mechanical properties of the two parts, this leads to problems. For example, the distortion characteristics of an elastic part are not exactly predictable, because the dimensions thereof are not exactly defined.

JP 2007-011047 describes how by centrifugal casting ("spin casting" or "centrifugal moulding"), a two-piece rubber sheet is formed. In a first steep the mould is partially, yet at least 80%, filled with a first polyurethane composition for a more elastic rubber with an α-value of 0.85, which is then cured at 130°C. Subsequently in a second step, the mould is filled with a second polyurethane composition for a rubber having a higher hardness and lower surface friction, and cured. The final product is a rubber knife of 2 mm thick with the elasticity of the first rubber, but with on one side, due to the harder rubber layer of about 0.1 mm, the low frictional resistance of the second rubber, and which is due to this combination of properties very suitable as a scraping knife ("cleaning blade") in the electrophotography or dry photocopying technique. JP 2007-011047 states that the thickness of the surface layer is of minor importance, as long as it is present, and no thicker than 20% of the total sheet thickness, and this to be able to maintain the elasticity of the main layer. Also in this technique the dimensions of the two components in their tangential plane are not exactly guaranteed.

WO 2008/003279 discloses a component for a vacuum pump consisting of a thermoset part and a silicone rubber part in contact with the thermoset part. The parts are formed by injection moulding in successive steps. The process comprises a first step in which the thermosetting composition is poured into a mould, after which the mould is adapted to receive the injection of silicone rubber. Between two consecutive injection moulding steps a process step may be provided in which the temperature of the thermoset part is adjusted, and also a deburring process step may be inserted. WO 2008/003279 does not describe the conditions under which the curing of the silicone rubber must take place. It is known to the person skilled in the art that silicone rubber is very often vulcanized at room temperature, which is generally known as "Room-temperature vulcanizing" (RTV). During cooling of the thermoset part down to room temperature, before the rubber composition is injected, there is a risk that due to thermal shrinkage a clearance is created between the thermoset part and the mould in which it sits. As a result, upon the injection of the rubber composition, some of the composition may leak into the space formed by the clearance, and vulcanize therein. Because of this, the rubber part is deformed, it deviates from the intended dimensions, and the thermoset part is marred with spots or a rubber layer on those surfaces where the rubber has no function. This means, moreover, an additional consumption of raw material.

Due to the lack of exactly guaranteed dimensions of the contact surface between the two components forming the objects from the prior art, there remains a need for a method which confers a higher precision to the dimensions of the various parts in the manufacture of objects which consist of a rigid thermoset part and an integrated elastic rubber part.

The present invention aims to avoid or at least alleviate the problems described above and/or in general, to provide improvements.

### SUMMARY OF THE INVENTION

According to the invention there is provided a process for the manufacture of a multi-part shaped object as defined in any of the attached claims.

The invention provides a method for producing a shaped object, comprising a rigid part and a resilient part, wherein the rigid part comprises a thermoset and provides mechanical support to the resilient part, the resilient part comprising vulcanized rubber and being suitable for fulfilling a sealing and/or shock-absorbing function, said method comprising a pre-forming step wherein the thermosetting composition is pre-formed in a first mould and then cured to form the rigid part, wherein the curing of the thermoset is carried out at a temperature in the range of 150 to 230°C, after which the first mould is adjusted and/or the cured rigid part is transferred to a second mould, and wherein the rubber is shaped afterwards by injection moulding, transfer moulding, press moulding, and/or pressing, and subsequently vulcanized to form the resilient part, and this while the rubber is in contact with the thermoset of the rigid part, wherein the vulcanization is carried out at a temperature in the range of 150 to 230°C.

We have found that in this way the dimensions of the two parts of the object may be guaranteed very precisely, also those of the intermediate surface which is created between the two or more different parts or components of the multi-part object. This advantage is provided because the first thermoset material is cured while it is still in its first mould, which guarantees very precise dimensions for the first part. The shaping of the rubber part occurs then subsequently in a space of which the dimensions are also precisely known, which is formed by the second and/or modified mould and the cured rigid part with its exact dimensions, so that the vulcanized rubber part also obtains exactly guaranteed dimensions. This offers the advantage that the behaviour of the rubber part may be very accurately predicted, which in many applications is of great importance such as the provision of a good seal under well-determined stress conditions. By allowing both the curing of the thermoset and the vulcanization of the rubber to take place in the temperature range 150-230°C, any possible shrinkage of the cured rigid part relative to the mould remains minimal, because the cured rigid part fills up the first mould as good as possible, so that possible leakage of the rubber composition between the mould and the cured rigid part is kept as small as possible, or even avoided. Under these conditions, it is also possible to assure that both the rigid part and the rubber part obtain exactly guaranteed dimensions. In this way, is also avoided that more rubber composition would be used than is necessary for the resilient part to be shaped, or that the object would have to be subjected to a post-treatment to remove the rubber caused by leakage. Such additional steps are usually complex and time consuming, and do generally not succeed in restoring the desired view of a pristine thermoset surface.

### DETAILED DESCRIPTION

The cured thermoset which forms the rigid part of the produced with the method according to the present invention, preferably has at least one feature, and possibly all of the features, from the list consisting of
- a Rockwell hardness as measured according to the standard test method ASTM D-785 with a Rockwell tester, of at least M60 to M140, preferably at least M70, more preferably at least M75 or even more preferably at least M80, and optionally at most M130, preferably at most M125, and more preferably at most M120,
- a Brinell hardness HB measured according to ISO 6506-1:2005 as HBS 10/100 of at least 1.6, preferably of at least 2.6, more preferably a HBW 10/3000 of at least 15, preferably at least 35, yet more preferably of at least 70, more preferably at least 90, yet more preferably at least 110, preferably at least 120, and further preferably at least 140, preferably at least 150, more preferably at least 200, even more preferably at least 250, preferably at least above 300, more preferably at least 350, more preferably at least 500, and more preferably at least 800,
- a tensile strength, as measured on a sample made by injection moulding in accordance with ISO 527, preferably from 10 to 400, more preferably from 20 to 300, yet more preferably from 30 to 200, even more preferably from 40 to 100, still more preferably from 60.0 to 70.0 MPa,
- an elongation at break, as measured on a sample made by injection moulding in accordance with ISO 527, of not more than 1.000%, preferably not more than 0.900%, more preferably not more than 0.800%, more preferably at most 0700 %, and even further more preferably not more than 0.600%,
- an E-modulus, or Young's Modulus of elasticity at room temperature (at about 23°C, or in other assays in the range of 20-25°C) as measured according to the standard test method ASTM D-638 of at least 2 to 30 GPa, preferably at least 3 and more preferably at least 4 or even 5 GPa, yet more preferably at least 6, or 7, or even 8 GPa, thereby possibly not more than 25 GPa, preferably not more than 20 GPa, but above that preferably not more than 18 GPa, or even not more than 16.0 GPa,
- a flexural modulus as measured on a sample made by injection moulding in accordance with ISO 178, of not more than 30 GPa, preferably not more than 25 GPa, more preferably not more than 20 GPa, moreover, preferably not more than 19 or even 18 GPa, and possibly at least 10 GPa, preferably at least 14 GPa, more preferably at least 16.0 GPa,
- a notch impact value determined by the Charpy impact strength test of at 23 ° C, as measured on a non-notched specimen, made by injection moulding in accordance with ISO 179/1eU, preferably from about 0.50-12.00 J/cm2, more preferably from 0.70-9.00 J/cm2, more preferably from 0.90-7.00 J/cm2, more preferably of from 1.00-4.00 J/cm2,
- a notch impact value determined by the Charpy impact strength test of at 23 ° C, as measured on a notched test sample, made by injection moulding in accordance with ISO 179/1eA, preferably from 0.100 to 1.000 J/cm2, more preferably from 0.200 to 0.700 J/cm2, more preferably from 0.300 to 0.500 J/cm2, more preferably from 0.350 to 0.450 J/cm2,
- an Electrical Volumetric Resistivity, as measured according to standard IEC 60093, preferably from 1.00 e+6 to 1.00 e+16 ohm-cm, more preferably 1.00 e+9 to 1.00 e+16 ohm-cm, more preferably 1.00 e+12 to 1.00 e+16 ohm-cm, more preferably from 1.00 e+15 to 1.00 e +16 ohm-cm,
- a dielectric constant as measured at a frequency of approximately 100Hz in accordance with standard IEC 60250, preferably from 1.50 to 10.00, more preferably from 3.00 to 8.00, more preferably from 4.00 to 7.00, more preferably from 6.00 to 6.50.

The vulcanized rubber which forms the elastic or resilient part of produced with the method according to the present invention preferably has at least one feature, and possibly all of the features, from the list consisting of
- a glass transition temperature Tg of not more than 25°C, preferably at most 15°C, more preferably at most 0°C, further preferably at most -10°C, preferably at most -25°C, yet more preferably at most -40°C, even more further preferably at most -50°C, more preferably -60°C, and yet more preferably at most -70°C,
- an E-modulus, or Young's Modulus of elasticity at room temperature (about 23°C, or in the range of 20-25°C) as measured according to the standard test method ASTM D-412, of preferably from 5 x 10⁻⁴ to 5 GPa, more preferably from 5 x 10⁻³ to 1 GPa, more preferably from 1 x 10⁻² to 0.5 GPa,
- a tensile strength at room temperature (about 23°C, or in the range of 20-25°C) as measured according to the standard test method ASTM D-412 of from 7 to 20 MPa, preferably from 12 to 17 MPa.

Preferably, the thermoset in the object produced with the method according to the present invention is selected from the list consisting of a phenol resin or a phenol formaldehyde (PF) resin, in which optionally substituted phenols such as cresol and/or other aldehydes than formaldehyde have been incorporated, and wherein novolac resin, or Bakelite but preferably resole resin is selected, a melamine formaldehyde (MPF) resin, a cellulose resin, a bis-maleimide resin, an epoxy resin, preferably based on bisphenol A, a polyester resin, a polyimide resin, a polyurethane resin, a silicone resin, urea, or urea-formaldehyde resin, melamine or melamine-formaldehyde resin, and mixtures thereof, where appropriate supplemented with a hardener, such as an epoxy resin, in which case the hardener may be an amine or an acid anhydride.

Found particularly suitable as thermosets are epoxy EP 3535, Melopas MP 180/181/182/183, Ralupol UP 804/4385/4806, all from the company Raschig, and Vyncolit 2923W Black, 4523XB Black, 4421XB Black, X613 Black, Green, X655 / X620/X680 black, green from the company Vyncolit.

In one embodiment of the present invention, the thermoset part is preferably reinforced with fibers, preferably fibers selected from the list consisting of glass fibre (GF), carbon fibre, cellulose fibre, and mixtures thereof. The fibres bring the advantage that the brittleness of the rigid part is reduced, and its strength is increased. This is particularly the case with phenol resins, which are preferably reinforced with glass fibres and/or mineral fibres.

In one embodiment of the object produced with the method according to the present invention, the rigid part further comprises at least one element selected from the list consisting of a filler, an organic peroxide, a mould release agent, and a curing promoter, wherein the filler is preferably selected from the list consisting of graphite, graphite powder, wood powder, wood flour, talcum powder, sand, a silicate, clay, and other mineral fillers such as calcium carbonate, and mixtures thereof.

In another embodiment of the object produced with the method according to the present invention, the rubber is selected from the list consisting of natural rubber, polyisoprene, preferably for at least 50% consisting of cis-polyisoprene, styrene-butadiene rubber, butadiene rubber, ethylene propylene rubber, nitrile rubber, chloroprene rubber, butyl rubber, silicone rubber, polynorbornene rubber, poly-urethane rubber, fluorocarbon rubber, polyacrylate rubber, fluorosilicone rubber, epichlorohydrine rubber, chlorosulfonated rubber, hydrated nitrile rubber, and mixtures thereof.

The most common way to vulcanize rubber, applicable to the majority of diene rubbers, such as natural rubber, styrene-butadiene rubber, ethylene propylene rubber and nitril rubber, is vulcanization with sulphur, in which the rubber is heated with sulphur, usually in the presence of organic vulcanization accelerators to save both time and raw materials. Diene rubbers may also be vulcanized with sulphur chloride or with a thiuram disulfide or bismorfoline disulfide. Butyl rubber may be vulcanized with quinonedioxim or phenols. Vulcanization with peroxides may be applied almost universally and is primarily used with ethylene propylene rubber and silicone rubber. Chloroprene rubber does not vulcanize with sulphur but does so with zinc oxide or a thiourea. Acrylate rubbers which contain a halogenated co-monomer are vulcanized with polyamines, and fluororubbers with a mixture of a metal oxide and an amine.

In yet another embodiment of the object produced with the method according to the present invention, the rubber is vulcanized with sulphur or with peroxides.

In the embodiment according to the present invention wherein the rubber is vulcanized with sulphur, the rubber contains at most 35% by weight of sulphur, preferably at most 25%, more preferably at most 15%, yet more preferably at most 10%, more preferably at most 8% or even only 6% by weight, and optionally the rubber contains at least 0.5% by weight of sulphur, preferably 1% by weight, and more preferably 1.2% by weight, calculated on the basis of the weight of rubber present in the resilient part.

In an embodiment of the object produced with the method according to the present invention, the resilient part further comprises in addition to the rubber at least one element selected from a vulcanization accelerator, a catalyst, a filler, wherein preferably the filler is selected from the list already given above.

In another embodiment, the object produced with the method according to the present invention is selected from the list consisting of a pump housing, a pump casing, a cylinder head cover for an internal combustion engine, an oil sump, a brake cylinder, an electrical component, such as a pedestal for an electrical relay, preferably a watertight relay, components for general electrical applications with water-tight requirements, such as for a pond pump or a submerged water pump, a part of a hydraulic and/or pneumatic application, such as a valve casing or housing, etc ....

The inventors have further found that with some thermosetting resins, a certain degree of thermal shrinkage may occur upon cooling after the curing of the thermoset. Particularly with such thermosets, it is preferred by the inventors that the rigid part is still sufficiently warm when the rubber composition is introduced into the cavity provided by the second mould or by the modified first mould.

In a further embodiment according to the present invention, the vulcanization is carried out at a temperature not lower than a maximum of 50 degrees Celsius under the curing temperature of the thermoset, more preferably not lower than at most 30 degrees Celsius, more preferably at most 25 degrees Celsius, and yet more preferably at most 20 degrees Celsius, more preferably that most 15 degrees Celsius, and more preferably at most 10 degrees Celsius below, more preferably at most 5°C below, more preferably not less than at most 2 degrees Celsius below, and most preferably not lower than the curing temperature of the thermoset.

This offers the advantage that the rigid part still well, or tightly, fills the part of the modified or second mould, which is being intended for it, at the moment that the rubber composition is introduced, in such a way that no or virtually no amount of the rubber composition may slip between the mould and the rigid part where it is not intended to flow to, even with thermoset materials which are characterized by a degree of thermal shrinkage.

The rubber may be provided in the modified or second mould in a composition which further comprises at least one element selected from sulphur, a sulphur-containing component, a vulcanization accelerator, a catalyst, a filler, wherein preferably the filler is selected from the list that have already been given earlier in this document.

The vulcanization may be carried out at a temperature in the range of from 160 to 210°C, preferably from 170 to 200°C, and more preferably from 175 to 195°C.

The curing of the thermoset may be carried out at a temperature in the range of 155 to 210°C, preferably from 160 to 200°C, and more preferably of 165 to 195°C.

In another embodiment of the method according to the present invention, the temperature of the rigid part is modified by heating or by cooling before it is brought into contact with the rubber composition. This reduces the risk that the rubber composition would vulcanize prematurely, before it would have filled the space in the mould. This additional step is preferably used if a thermoset is chosen which is characterized by little or no thermal shrinkage, or, if the second mould is adapted to closely enclose the rigid part at the appropriate temperature at those points or surfaces which are not intended to come into contact with the rubber composition.

In a further embodiment of the method according to the present invention, the curing and/or the vulcanization is progressed further by an additional thermal treatment by exposure of the object to a particular temperature, such as described herein above for a period of at least 4 hours, preferably at least 8 hours, more preferably 12 hours, further preferred at least 18 hours, preferably at least 24 hours, more preferably 36 hours, more preferably at least 48 hours, or even at least 72 hours.

In a further embodiment of the method according to the present invention, the method further comprises the deburring of at least one side of at least a part of the object, selected from the rigid part and the resilient part, or of both parts.

In a further embodiment of the method according to the present invention, the method includes subjecting the object to a mechanical operation selected from the list consisting of drilling, milling, turning on a lathe, and tapping screw thread, or a combination thereof.

In a further embodiment of the method according to the present invention, the method further comprises subjecting the object to a surface treatment selected from the list consisting of labelling, lacquering, painting, printing, metallization, such as vapour deposition of a metal, and rough sanding, for example to give at least one of the surfaces a rougher aspect, or a combination thereof.

In a further embodiment of the method according to the present invention, the method further comprises the introduction into the object of an insert, such as a bolt or other metal part, for example, an electrical contact, and this insertion may occur even before the thermosetting composition is introduced into the first mould, or before or after the vulcanization of the rubber, and which may also occur before or after the deburring, or before or after the mechanical treatment, or before or after the surface treatment.

In yet a further embodiment of the method according to the present invention, the method further comprises the incorporation of the object into a composite object.

Now this invention has been fully described, the skilled person will realize that the invention may be carried out with a wide range of parameters within what is claimed, without thereby departing from the scope of the invention, as defined by the claims.

## Claims

1. A method for producing a shaped object, comprising a rigid and a resilient part, wherein the rigid part comprises a thermoset and provides mechanical support to the resilient part, the resilient part comprising vulcanized rubber, and being suitable for performing a sealing and/or shock-absorbing function, said method comprising a pre-forming step wherein the thermosetting composition is pre-formed in a first mould and then cured to form the rigid part, wherein the curing of the thermosetting composition is carried out at a temperature in the range of 150 to 230°C, after which the first mould is adjusted and/or the cured rigid part is transferred to a second mould, and wherein the rubber is shaped afterwards by injection moulding, transfer moulding, press moulding, and/or pressing, and subsequently vulcanized to form the resilient part, and this while the rubber is in contact with the thermoset of the rigid part, wherein the vulcanization is carried out at a temperature in the range of 150 to 230°C.

2. The method according to claim 1, wherein the cured thermoset has at least one feature from the list consisting of
• a Rockwell hardness as measured according to the standard test method ASTM D-785 with a Rockwell tester, of at least M60 to M140, preferably at least M70, more preferably at least M75 or even at least M80, and optionally at most M130, preferably at most M125, and more preferably at most M120,
• a Brinell hardness HB measured according to ISO 6506-1:2005 as HBS 10/100 of at least 1.6, preferably of at least 2.6, more preferably a HBW 10/3000 of at least 15, preferably at least 35, yet more preferably of at least 70, more preferably at least 90, yet more preferably at least 110, preferably at least 120, and further preferably at least 140, preferably at least 150, more preferably at least 200, even more preferably at least 250, preferably at least above 300, more preferably at least 350, more preferably at least 500, and more preferably at least 800,
• a tensile strength, as measured on a sample made by injection moulding in accordance with ISO 527, preferably from 10 to 400, more preferably from 20 to 300, yet more preferably from 30 to 200, even more preferably from 40 to 100, still more preferably from 60.0 to 70.0 MPa,
• an elongation at break, as measured on a sample made by injection moulding in accordance with ISO 527, of not more than 1.000%, preferably not more than 0.900%, more preferably not more than 0,800%, more preferably at most 0700 %, and even further more preferably not more than 0.600%,
• an E-modulus, or Young's Modulus of elasticity at room temperature (at about 23°C, or in other assays in the range of 20-25°C) as measured according to the standard test method ASTM D-638 of at least 2 to 30 GPa, preferably at least 3 and more preferably at least 4 or even 5 GPa, yet more preferably at least 6, or 7, or even 8 GPa, thereby possibly not more than 25 GPa, preferably not more than 20 GPa, but above that preferably not more than 18 GPa, or even not more than 16.0 GPa,
• a flexural modulus as measured on a sample made by injection moulding in accordance with ISO 178, of not more than 30 GPa, preferably not more than 25 GPa, more preferably not more than 20 GPa, moreover, preferably not more than 19 or even 18 GPa, and possibly at least 10 GPa, preferably at least 14 GPa, more preferably at least 16.0 GPa,
• a notch impact value determined by the Charpy impact strength test of at 23 ° C, as measured on a non-notched specimen, made by injection moulding in accordance with ISO 179/1eU, preferably from about 0.50-12.00 J/cm2, more preferably from 0.70-9.00 J/cm2, more preferably from 0.90-7.00 J/cm2, more preferably of from 1.00-4.00 J/cm2,
• a notch impact value determined by the Charpy impact strength test of at 23 ° C, as measured on a notched test sample, made by injection moulding in accordance with ISO 179/1eA, preferably from 0.100 to 1.000 J/cm2, more preferably from 0.200 to 0.700 J/cm2, more preferably from 0.300 to 0.500 J/cm2, more preferably from 0.350 to 0.450 J/cm2,
• an Electrical Volumetric Resistivity, as measured according to standard IEC 60093, preferably from 1.00 e+6 to 1.00 e+16 ohm-cm, more preferably 1.00 e+9 to 1.00 e+16 ohm-cm, more preferably 1.00 e+12 to 1.00 e+16 ohm-cm, more preferably from 1.00 e+15 to 1.00 e +16 ohm-cm,
• a dielectric constant as measured at a frequency of approximately 100Hz in accordance with standard IEC 60250, preferably from 1.50 to 10.00, more preferably from 3.00 to 8.00, more preferably from 4.00 to 7.00, more preferably from 6.00 to 6.50.

3. The method according to claim 1 or 2 in which the vulcanized rubber has at least one feature from the list consisting of
• a glass transition temperature Tg of not more than 25°C, preferably not exceeding 15°C, more preferably at most 0°C, further preferably at most -10°C, preferably at most -25°C, yet more preferably at most -40°C, even more further preferably at most -50°C, more preferably -60°C, and yet more preferably at most -70°C,
• an E-modulus, or Young's Modulus of elasticity, at room temperature (about 23°C, or in the range of 20-25°C) as measured according to the standard test method ASTM D-412, of preferably from 5 x 10⁻⁴ to 5 GPa, more preferably from 5 x 10⁻³ to 1 GPa, more preferably from 1 x 10⁻² to 0.5 GPa,
• a tensile strength at room temperature (about 23°C, or in the range of 20-25°C) as measured according to the standard test method ASTM D-412 of from 7 to 20 MPa, preferably from 12 to 17 MPa.

4. The method according to any one of the preceding claims, wherein the thermoset is selected from the list consisting of a phenol resin and a phenol formaldehyde (PF) resin, in which optionally substituted phenols such as cresol and / or other aldehydes than formaldehyde have been incorporated, and wherein novolac resin, or Bakelite, but preferably resole resin is selected, a melamine formaldehyde (MPF) resin, a cellulose resin, a bis-maleimide resin, an epoxy resin, preferably based on bisphenol A, a polyester resin, a polyimide resin, a polyurethane resin, a silicone resin, urea, or urea-formaldehyde resin, melamine or melamine-formaldehyde resin, and mixtures thereof, where appropriate supplemented with a hardener, such as an epoxy resin, in which case the hardener may be an amine or an acid anhydride.

5. The method according to any one of the preceding claims, wherein the thermoset is reinforced with fibres, preferably chosen from the list consisting of glass fibre (GF), carbon fibre, cellulose fibre, and mixtures thereof.

6. The method according to any one of the preceding claims, wherein the rigid part further comprises at least one element selected from the list consisting of a filler, an organic peroxide, a mould release agent, and a curing promoter, also called a catalyst, wherein the filler is preferably selected from the list consisting of graphite, graphite powder, wood powder, wood flour, talcum powder, sand, a silicate, clay, and other mineral fillers such as calcium carbonate, and mixtures thereof.

7. The method according to any one of the preceding claims wherein the rubber is selected from the list consisting of natural rubber, polyisoprene, preferably for at least 50% consisting of cis-polyisoprene, styrene-butadiene rubber, butadiene rubber, ethylene propylene rubber, nitrile rubber, chloroprene rubber, butyl rubber, silicone rubber, polynorbornene rubber, poly-urethane rubber, fluorocarbon rubber, polyacrylate rubber, fluorosilicone rubber, epichlorohydrine rubber, chlorosulfonated rubber, hydrated nitrile rubber, and mixtures thereof.

8. The method according to any one of the preceding claims wherein the rubber is vulcanised with sulphur or with peroxides.

9. The method according to any one of the preceding claims, wherein the vulcanization is carried out while the cured rigid part has a temperature not lower than at most 50 degrees Celsius under the vulcanization temperature of the rubber, more preferably not lower than at most 30 degrees Celsius, more preferably at most 25 degrees Celsius, and even more preferably at most 20 degrees Celsius, more preferably at most 15 degrees Celsius, and more preferably at most 10 degrees Celsius below, more preferably at most 5°C below, more preferably not lower than at most 2 degrees Celsius below, and most preferably not lower than the vulcanization temperature of the rubber.

10. The method according to any one of the preceding claims wherein the curing and/or the vulcanization is progressed further by providing an additional thermal treatment by exposure of the object to a particular temperature, such as described in one of the preceding claims, for a period of at least 4 hours, preferably at least 8 hours, more preferably 12 hours, further preferred at least 18 hours, preferably at least 24 hours, more preferably 36 hours, more preferably at least 48 hours, or even at least 72 hours.

11. The method according to any one of the preceding claims further comprising the deburring of at least one side of at least a part of the object, selected from the rigid part and the resilient part, or of both parts.

12. The method according to any one of the preceding claims further comprising subjecting the object to a mechanical operation selected from the list consisting of drilling, milling, turning on a lathe, and tapping screw thread, or a combination thereof.

13. The method according to any one of the preceding claims further comprising subjecting the object to a surface treatment selected from the list consisting of labelling, lacquering, painting, printing, metallization, such as vapour deposition of a metal, and rough sanding, for example to give at least one of the surfaces a rougher aspect, or a combination thereof.

14. The method according to any one of the preceding claims further comprising the introduction into the object of an insert, such as a bolt or other metal part, and this insertion may occur even before the thermosetting composition is introduced in the first mould, or before or after the vulcanisation of the rubber, and which may also occur before or after the deburring, or before or after the mechanical treatment, or before or after the surface treatment.

15. The method according to any one of the preceding claims further comprising the incorporation of the object into a composite object.

## Patentansprüche

1. Verfahren zur Herstellung eines geformten Gegenstandes, der einen starren und einen elastischen Teil umfasst, wobei der starre Teil einen Duroplast umfasst und eine mechanische Abstützung des elastischen Teils bereitstellt, wobei der elastische Teil vulkanisierten Kautschuk umfasst und dafür geeignet ist, eine abdichtende oder stoßabsorbierende Funktion auszuführen, wobei das Verfahren einen Vorformungsschritt umfasst, bei dem die wärmehärtende Zusammensetzung in einem ersten Formwerkzeug vorgeformt und dann gehärtet wird, um das starre Teil zu bilden, wobei das Härten der wärmehärtenden Zusammensetzung bei einer Temperatur im Bereich von 150 bis 230 °C ausgeführt wird, wonach das erste Formwerkzeug justiert und/oder der gehärtete starre Teil in ein zweites Formwerkzeug überführt wird, und wobei danach der Kautschuk durch Spritzgießen, Spritzpressen, Formpressen und/oder Pressen geformt und anschließend vulkanisiert wird, um den elastischen Teil zu bilden, währenddessen der Kautschuk in Kontakt mit dem Duroplast des starren Teils steht, wobei die Vulkanisierung bei einer Temperatur im Bereich von 150 bis 230 °C ausgeführt wird.

2. Verfahren nach Anspruch 1, wobei der gehärtete Duroplast mindestens ein Merkmal der Liste aufweist, die aus Folgendem besteht:
- einer Rockwellhärte, gemessen gemäß dem Normprüfverfahren ASTM D-785 mit einem Rockwelltester, von mindestens M60 bis M140, vorzugsweise mindestens M70, bevorzugter mindestens M75 oder sogar mindestens M80 und optional maximal M130, vorzugsweise maximal M125 und bevorzugter maximal M120,
- einer Brinellhärte HB, gemessen gemäß ISO 6506-1:2005 als HBS 10/100, von mindestens 1,6, vorzugsweise mindestens 2,6, bevorzugter einem HBW 10/3000 von mindestens 15, vorzugsweise mindestens 35, noch bevorzugter von mindestens 70, bevorzugter mindestens 90, noch bevorzugter mindestens 110, vorzugsweise mindestens 120 und weiter bevorzugt mindestens 140, vorzugsweise mindestens 150, bevorzugter mindestens 200, noch bevorzugter mindestens 250, vorzugsweise mindestens über 300, bevorzugter mindestens 350, bevorzugter mindestens 500 und noch bevorzugter mindestens 800,
- einer Zugfestigkeit, gemessen gemäß ISO 527 an einer durch Spritzgießen hergestellten Probe, von vorzugsweise von 10 bis 400, bevorzugter von 20 bis 300, noch bevorzugter von 30 bis 200, noch bevorzugter von 40 bis 100, noch bevorzugter von 60,0 bis 70,0 MPa,
- einer Bruchdehnung, gemessen gemäß ISO 527 an einer durch Spritzgießen hergestellten Probe, von nicht mehr als 1,000 %, vorzugsweise nicht mehr als 0,900 %, bevorzugter nicht mehr als 0,800 %, bevorzugter maximal 0,700 % und noch bevorzugter nicht mehr als 0,600 %,
- einem Elastizitätsmodul oder Young-Elastizitätsmodul bei Raumtemperatur (bei etwa 23 °C oder in anderen Untersuchungen im Bereich von 20 bis 25 °C), gemessen gemäß dem Normprüfverfahren ASTM D-638, von mindestens 2 bis 30 GPa, vorzugsweise mindestens 3 und bevorzugter mindestens 4 oder sogar 5 GPa, noch bevorzugter mindestens 6 oder 7 oder sogar 8 GPa, dabei möglichst nicht mehr als 25 GPA, vorzugsweise nicht mehr als 20 GPa, aber darüber vorzugsweise nicht mehr als 18 GPA oder sogar nicht mehr als 16,0 GPA,
- einem Biegemodul, gemessen gemäß ISO 178 an einer durch Spritzgießen hergestellten Probe, von nicht mehr als 30 GPa, vorzugsweise nicht mehr als 25 GPa, bevorzugter nicht mehr als 20 GPa, bevorzugter nicht mehr als 19 oder sogar 18 GPa und möglichst mindestens 10 GPa, vorzugsweise mindestens 14 GPa, bevorzugter mindestens 16,0 GPa,
- einer Kerbschlagzähigkeit, bestimmt durch die Charpy-Kerbschlagzähigkeitsprüfung bei 23°C, gemessen an einer ungekerbten Probe, die gemäß ISO 179/1eU durch Spritzgießen hergestellt wurde, von vorzugsweise etwa 0,50 bis 12,00 J/cm², bevorzugter von 0,70 bis 9,00 J/cm², bevorzugter von 0,90 bis 7,00 J/cm² noch bevorzugter von 1,00 bis 4,00 J/cm²,
- einem Kerbschlagzähigkeitswert, bestimmt durch die Charpy-Kerbschlagzähigkeitsprüfung bei 23°C, gemessen an einer gekerbten Probe, die gemäß ISO 179/1eA durch Spritzgießen hergestellt wurde, von vorzugsweise etwa 0,100 bis 1,000 J/cm², bevorzugter von 0,200 bis 0,700 J/cm², bevorzugter von 0,300 bis 0,500 J/cm², noch bevorzugter von 0,350 bis 0,450 J/cm²,
- einem volumetrischen elektrischen Widerstand, gemessen gemäß der Norm IEC 60093, von vorzugsweise 1,00 e+6 bis 1,00 e+16 Ohm-cm, bevorzugter 1,00 e+9 bis 1,00 e+16 Ohm-cm, bevorzugter 1,00 e+12 bis 1,00 e+16 Ohm-cm bevorzugter von 1,00 e+15 bis 1,00 e+16 Ohm-cm,
- einer Dielektrizitätskonstante, gemessen bei einer Frequenz von etwa 100 Hz gemäß der Norm ICE 60250, von vorzugsweise 1,50 bis 10,00, bevorzugter von 3,00 bis 8,00 bevorzugter von 4,00 bis 7,00, bevorzugter von 6,00 bis 6,50.

3. Verfahren nach Anspruch 1 oder 2, wobei der vulkanisierte Kautschuk mindestens ein Merkmal der Liste aufweist, die aus Folgendem besteht:
- einer Glasübergangstemperatur Tg von nicht mehr als 25 °C, vorzugsweise 15 °C nicht übersteigend, bevorzugter maximal 0 °C, weiter bevorzugt maximal -10 °C, vorzugsweise maximal -25 °C, noch bevorzugter maximal -40 °C, noch bevorzugter maximal -50 °C, bevorzugter - 60 °C und noch bevorzugter maximal -70 °C,
- einem Elastizitätsmodul oder Young-Elastizitätsmodul bei Raumtemperatur (etwa 23 °C oder im Bereich von 20 bis 25 °C), gemessen gemäß dem Normprüfverfahren ASTM D-412, von vorzugsweise 5 x 10⁻⁴ bis 5 GPa, bevorzugter 5 x 10⁻³ bis 1 GPa, bevorzugter 1 x 10⁻² bis 0,5 GPa,
- einer Zugfestigkeit bei Raumtemperatur (etwa 23 °C oder im Bereich von 20 bis 25 °C), gemessen gemäß dem Normprüfverfahren ASTM D-412, von 7 bis 20 MPa, vorzugsweise von 12 bis 17 MPa.

4. Verfahren nach einem der vorhergehenden Ansprüche, wobei der Duroplast aus der Liste ausgewählt wird, die aus einem Phenolharz und einem Phenolformaldehyd-(PF)-Harz besteht, in das optional substituierte Phenole, wie beispielsweise Cresol und/oder andere Aldehyde als Formaldehyd eingebunden sind, und wobei Novalac-Harz oder Bakelit, aber vorzugsweise Resolharz ausgewählt wird, einem Melaminformaldehyd-(MPF)-Harz, einem Celluloseharz, einem Bismaleimidharz, einem Epoxidharz, vorzugsweise auf Bisphenol A basierend, einem Polyesterharz, einem Polyimidharz, einem Polyurethanharz, einem Silikonharz, Harnstoff oder Harnstoff-Formaldehydharz, Melamin- oder Melaminformaldehydharz und Mischungen daraus, gegebenenfalls mit Härtungsmittel ergänzt, wie beispielsweise einem Epoxidharz, wobei in diesem Fall das Härtungsmittel ein Amin oder ein Säureanhydrid sein kann.

5. Verfahren nach einem der vorhergehenden Ansprüche, wobei der Duroplast mit Fasern verstärkt wird, die vorzugsweise aus der Liste ausgewählt werden, die aus Glasfaser (GF), Kohlefaser, Cellulosefaser und Mischungen daraus besteht.

6. Verfahren nach einem der vorhergehenden Ansprüche, wobei der starre Teil ferner mindestens ein Element umfasst, das aus der Liste ausgewählt wird, die aus einem Füllstoff, einem organischen Peroxid, einem Formtrennmittel und einem Härtungsfördermittel, auch als Katalysator bezeichnet, besteht, wobei der Füllstoff vorzugsweise aus der Liste ausgewählt wird, die aus Graphit, Graphitpulver, Holzpulver, Holzmehl, Talkumpulver, Sand, einem Silicat, Ton oder anderen mineralischen Füllstoffen, wie beispielsweise Calciumkarbonat, und Mischungen daraus besteht.

7. Verfahren nach einem der vorhergehenden Ansprüche, wobei der Kautschuk aus der Liste ausgewählt wird, die aus Folgendem besteht: Naturkautschuk, Polyisopren, das vorzugsweise zu mindestens 50 % aus Cis-Polyisopren besteht, Styrolbutadienkautschuk, Butadienkautschuk, Ethylenpropylenkautschuk, Nitrilkautschuk, Chloroprenkautschuk, Butylkautschuk, Silikonkautschuk, Polynorbornenkautschuk, Polyurethankautschuk, Fluorkohlenstoffkautschuk, Polyacrylatkautschuk, Fluorsilikonkautschuk, Epichlorhydrinkautschuk, chlorsulfoniertem Kautschuk, hydriertem Nitrilkautschuk und Mischungen daraus.

8. Verfahren nach einem der vorhergehenden Ansprüche, wobei der Kautschuk mit Schwefel oder mit Peroxiden vulkanisiert wird.

9. Verfahren nach einem der vorhergehenden Ansprüche, wobei das Vulkanisieren ausgeführt wird, während der gehärtete starre Teil eine Temperatur von nicht weniger als maximal 50 °C unter der Vulkanisierungstemperatur des Kautschuks aufweist, bevorzugter nicht weniger als maximal 30 °C, bevorzugter maximal 25 °C und noch bevorzugter maximal 20 °C, bevorzugter maximal 15 °C und bevorzugter maximal 10 °C darunter, bevorzugter maximal 5 °C darunter, bevorzugter nicht weniger als maximal 2 °C darunter und am stärksten bevorzugt nicht geringer als die Vulkanisierungstemperatur des Kautschuks.

10. Verfahren nach einem der vorhergehenden Ansprüche, wobei das Härten und/oder das Vulkanisieren des Weiteren durch Bereitstellen einer zusätzlichen thermischen Behandlung vorangetrieben wird, indem das Objekt mindestens 4 Stunden lang einer bestimmten Temperatur, wie in einem der vorhergehenden Ansprüche beschrieben, ausgesetzt wird, vorzugsweise mindestens 8 Stunden, bevorzugter 12 Stunden, weiter bevorzugt mindestens 18 Stunden, vorzugsweise mindestens 24 Stunden, bevorzugter 36 Stunden, bevorzugter mindestens 48 Stunden oder sogar mindestens 72 Stunden.

11. Verfahren nach einem der vorhergehenden Ansprüche, ferner das Entgraten mindestens einer Seite mindestens eines Teils des Gegenstandes, der aus dem starren Teil und dem elastischen Teil oder aus beiden Teilen ausgewählt wird, umfassend.

12. Verfahren nach einem der vorhergehenden Ansprüche, ferner umfassend, dass der Gegenstand einem mechanischen Vorgang unterzogen wird, der aus der Liste ausgewählt wird, die aus Bohren, Fräsen, Drehen auf einer Drehmaschine und Schneiden eines Schraubgewindes oder einer Kombination daraus besteht.

13. Verfahren nach einem der vorhergehenden Ansprüche, ferner umfassend, dass der Gegenstand einer Oberflächenbehandlung unterzogen wird, die aus der Gruppe ausgewählt wird, die aus Etikettieren, Lackieren, mit einer Farbschicht Versehen, Bedrucken, Metallisierung, wie beispielsweise Dampfabscheidung eines Metalls, Grobschleifen, um zum Beispiel mindestens einer der Oberflächen einen raueren Aspekt zu verleihen, oder einer Kombination daraus besteht.

14. Verfahren nach einem der vorhergehenden Ansprüche, ferner das Einführen eines Einsatzes in den Gegenstand umfassend, wie beispielsweise eines Bolzens oder eines anderen Metallteils, und dieses Einsetzen kann sogar stattfinden, bevor die wärmehärtende Zusammensetzung in das erste Formwerkzeug eingeführt wird oder vor oder nach der Vulkanisierung des Kautschuks und kann außerdem vor oder nach dem Entgraten oder vor oder nach der mechanischen Behandlung oder vor oder nach der Oberflächenbehandlung stattfinden.

15. Verfahren nach einem der vorhergehenden Ansprüche, ferner das Einführen des Gegenstandes in einen Verbundgegenstand umfassend.

## Revendications

1. Procédé de fabrication d'un objet façonné, comprenant une partie rigide et une partie élastique, dans lequel la partie rigide comprend un thermodurcissable et fournit un support mécanique à la partie élastique, la partie élastique comprenant du caoutchouc vulcanisé et étant appropriée pour remplir une fonction d'étanchéité et/ou d'absorption de chocs, ledit procédé comprenant une étape de préformage dans laquelle la composition thermodurcissable est préformée dans un premier moule et puis réticulée pour former la partie rigide, la réticulation de la composition thermodurcissable étant effectuée à une température de l'ordre de 150 à 230 °C, après quoi le premier moule est ajusté et/ou la partie rigide réticulée est transférée dans un deuxième moule, et dans lequel le caoutchouc est ensuite façonné par moulage par injection, moulage par transfert, moulage par pressage et/ou pressage, et vulcanisé subséquemment pour former la partie élastique, et ce pendant que le caoutchouc est en contact avec le thermodurcissable de la partie rigide, la vulcanisation étant effectuée à une température de l'ordre de 150 à 230 °C.

2. Procédé selon la revendication 1, dans lequel le thermodurcissable réticulé a au moins une caractéristique de la liste consistant en :
• une dureté Rockwell telle que mesurée selon la méthode d'essai standard ASTM D-785 avec un appareil de contrôle Rockwell, d'au moins M60 à M140, de préférence d'au moins M70, mieux encore d'au moins M75 ou même d'au moins M80 et éventuellement d'au plus M130, de préférence d'au plus M125 et mieux encore d'au plus M120,
• une dureté Brinell HB mesurée selon ISO 6506-1 :2005 comme HBS 10/100 d'au moins 1,6, de préférence d'au moins 2,6, mieux encore un HBW 10/3000 d'au moins 15, de préférence d'au moins 35, même mieux encore d'au moins 70, mieux encore d'au moins 90, même mieux encore d'au moins 110, de préférence d'au moins 120, et de manière encore plus préférable d'au moins 140, de préférence d'au moins 150, mieux encore d'au moins 200 et même mieux encore d'au moins 250, de préférence au moins supérieure à 300, mieux encore d'au moins 350, mieux encore d'au moins 500 et mieux encore d'au moins 800,
• une résistance à la traction telle que mesurée sur un échantillon réalisé par moulage par injection selon ISO 527, de préférence de 10 à 400, mieux encore de 20 à 300, encore mieux de 30 à 200, même mieux encore de 40 à 100 et encore mieux de 60,0 à 70,0 Mpa,
• un allongement à la rupture, tel que mesuré sur un échantillon réalisé par moulage par injection selon ISO 527, de pas plus de 1000 %, mieux encore de pas plus de 0,900 %, mieux encore de pas plus de 0,800 %, mieux encore d'au plus 0,700 % et même mieux encore de pas plus de 0,600 %,
• un module E, ou module d'élasticité d'Young à température ambiante (à environ 23 °C, ou dans d'autres essais dans la plage de 20-25 °C) tel que mesuré selon la méthode d'essai standard ASTM D-638 d'au moins 2 à 30 GPa, de préférence d'au moins 3 et mieux encore d'au moins 4 ou même 5 GPa, même mieux encore d'au moins 6, ou 7, ou même 8 GPa, et éventuellement de pas plus de 25 GPa, de préférence de pas plus de 20 GPa mais par-dessus cela de pas plus 18 GPa ou même de pas plus de 16,0 GPa,
• un module d'élasticité en flexion tel que mesuré sur un échantillon réalisé par moulage par injection selon ISO 178, de pas plus de 30 GPa, de préférence de pas plus de 25 GPa, mieux encore de pas plus de 20 GPa, de surcroît de pas plus de 19 ou même 18 GPa, et éventuellement d'au moins 10 GPa, de préférence d'au moins 14 GPa, mieux encore d'au moins 16,0 GPa,
• une valeur de choc sur entaille déterminée par l'essai de résistance au choc de Charpy à 23 °C, telle que mesurée sur un spécimen non entaillé, réalisé par moulage par injection selon ISO 179/1eU, de préférence d'environ 0,50-12,00 J/cm², mieux encore de 0,70-9,00 J/cm², mieux encore de 0,90-7,00 J/cm², mieux encore de 1,00-4,00 J/cm²,
• une valeur de choc sur entaille déterminée par l'essai de résistance au choc de Charpy à 23 °C, telle que mesurée sur un échantillon d'essai entaillé, réalisé par moulage par injection selon ISO 179/1eA, de préférence de 0,100 à 1000 J/cm², mieux encore de 0,200 à 0,700 J/cm², mieux encore de 0,300 à 0,500 J/cm², mieux encore de 0,350 à 0,450 J/cm²,
• une résistivité volumétrique électrique, telle que mesurée selon la norme IEC 60093, de préférence de 1,00 e+6 à 1,00 e+16 ohm-cm, mieux encore de 1,00 e+9 à 1,00 e+16 ohm-cm, mieux encore 1,00 e+12 à 1,00 e+16 ohm-cm, mieux encore de 1,00 e+15 à 1,00 e+16 ohm-cm,
• une constante diélectrique telle que mesurée à une fréquence d'approximativement 100 Hz selon la norme IEC 60250, de préférence de 1,50 à 10,00, mieux encore de 3,00 à 8,00, mieux encore de 4,00 à 7,00, mieux encore de 6,00 à 6,50.

3. Procédé selon la revendication 1 ou 2 dans lequel le caoutchouc vulcanisé a au moins une caractéristique de la liste consistant en :
• une température de transition vitreuse Tg de pas plus de 25 °C, de préférence ne dépassant pas 15 °C, mieux encore d'au plus 0 °C, encore mieux d'au plus -10 °C, de préférence d'au plus -25 °C, mieux encore d'au plus -40 °C, même mieux encore d'au plus -50 °C, mieux encore -60 °C et même mieux encore d'au plus -70 °C,
• un module E ou module d'élasticité de Young, à température ambiante (environ 23 °C ou dans la plage de 20-25 °C) tel que mesuré selon la méthode d'essai standard ASTM D-412, de préférence de 5 x 10⁻⁴ à 5 GPa, mieux encore de 5 x 10⁻³ à 1 GPa, mieux encore de 1 x 10⁻² à 0,5 GPa,
• une résistance à la traction à température ambiante (environ 23 °C ou dans la plage de 20-25 °C) telle que mesurée selon la méthode d'essai standard ASTM D-412 de 7 à 20 MPa, de préférence de 12 à 17 MPa.

4. Procédé selon l'une quelconque des revendications précédentes, dans lequel le thermodurcissable est sélectionné dans la liste consistant en une résine phénolique et une résine phénol-formaldéhyde (PF), dans lesquelles des phénols éventuellement substitués tel que du crésol et/ou des aldéhydes autres que du formaldéhyde ont été incorporés, et dans lesquelles la résine novalac ou la Bakélite, mais de préférence la résine résole est sélectionnée, une résine mélamine formaldéhyde (MPF), une résine cellulosique, une résine bis-maléimide, une résine époxy, de préférence à base de bisphénol A, une résine polyester, une résine polyimide, une résine polyuréthane, une résine silicone, une résine urée, ou résine urée-formaldéhyde, résine mélamine ou mélamine-formaldéhyde, et des mélanges de celles-ci, complétée, si approprié, avec un durcisseur, tel qu'une résine époxy, auquel cas le durcisseur peut être une amine ou un anhydride d'acide.

5. Procédé selon l'une quelconque des revendications précédentes, dans lequel le thermodurcissable est renforcé par des fibres, de préférence choisies dans la liste consistant en fibres de verre (GF), fibres de carbone, fibres de cellulose et des mélanges de celles-ci.

6. Procédé selon l'une quelconque des revendications précédentes, dans lequel la partie rigide comprend en outre au moins un élément sélectionné dans la liste consistant en une charge, un peroxyde organique, un agent de démoulage et un promoteur de durcissement, également appelé un catalyseur, dans lequel la charge est de préférence sélectionnée dans la liste consistant en graphite, poudre de graphite, poudre de bois, farine de bois, poudre de talc, sable, un silicate, argile et d'autres charges minérales telles que du carbonate de calcium, et des mélanges de ceux-ci.

7. Procédé selon l'une quelconque des revendications précédentes, dans lequel le caoutchouc est sélectionné dans la liste consistant en caoutchouc naturel, polyisoprène, de préférence consistant pour au moins 50 % en cis-polyisoprène, caoutchouc styrène-butadiène, caoutchouc butadiène, caoutchouc éthylène propylène, caoutchouc nitrile, caoutchouc chloroprène, caoutchouc butyle, caoutchouc silicone, caoutchouc polynorbornène, caoutchouc polyuréthane, caoutchouc fluorocarbone, caoutchouc polyacrylate, caoutchouc fluorosilicone, caoutchouc épichlorhydrine, caoutchouc chlorosulfonaté, caoutchouc nitrile hydraté, et des mélanges de ceux-ci.

8. Procédé selon l'une quelconque des revendications précédentes, dans lequel le caoutchouc est vulcanisé avec du soufre ou avec des peroxydes.

9. Procédé selon l'une quelconque des revendications précédentes, dans lequel la vulcanisation est effectuée pendant que la partie rigide réticulée a une température non inférieure d'au plus 50 degrés Celsius à la température de vulcanisation du caoutchouc, mieux encore non inférieure d'au plus 30 degrés Celsius, mieux encore d'au 25 degrés Celsius et même mieux encore d'au plus 20 degrés Celsius, mieux encore d'au plus 15 degrés Celsius, et mieux encore d'au plus 10 degrés Celsius, mieux encore d'au plus 5 °C, mieux encore non inférieure d'au plus 2 degrés Celsius et idéalement non inférieure à la température de vulcanisation du caoutchouc.

10. Procédé selon l'une quelconque des revendications précédentes, dans lequel la réticulation et/ou la vulcanisation est avancée ultérieurement en prévoyant un traitement thermique additionnel par exposition de l'objet à une température particulière, telle que décrite dans une des revendications précédentes, pendant une période d'au moins 4 heures, de préférence d'au moins 8 heures, mieux encore de 12 heures, encore mieux d'au moins 18 heures, de préférence d'au moins 24 heures, mieux encore de 36 heures, mieux encore d'au moins 48 heures ou même d'au moins 72 heures.

11. Procédé selon l'une quelconque des revendications précédentes comprenant en outre l'ébarbage d'au moins un côté d'au moins une partie de l'objet, sélectionnée parmi la partie rigide et la partie élastique, ou des deux parties.

12. Procédé selon l'une quelconque des revendications précédentes comprenant en outre la soumission de l'objet à une opération mécanique sélectionnée dans la liste consistant en perçage, fraisage, tournage sur un tour et filetage de vis à tôle, ou une combinaison de ceux-ci.

13. Procédé selon l'une quelconque des revendications précédentes comprenant en outre la soumission de l'objet à un traitement de surface sélectionné dans la liste consistant en étiquetage, vernissage, peinture, impression, métallisation, telle que dépôt en phase vapeur d'un métal, sablage grossier, par exemple pour donner à au moins une des surfaces un aspect plus rugueux, ou une combinaison de ceux-ci.

14. Procédé selon l'une quelconque des revendications précédentes comprenant en outre l'introduction dans l'objet d'un insert tel qu'un boulon ou une autre pièce métallique, et cette insertion peut avoir lieu même avant que la composition thermodurcissable soit introduite dans le premier moule, ou avant ou après la vulcanisation du caoutchouc, et qui peut aussi avoir lieu avant ou après l'ébarbage, ou avant ou après le traitement mécanique, ou avant ou après le traitement de surface.

15. Procédé selon l'une quelconque des revendications précédentes comprenant en outre l'incorporation de l'objet dans un objet composite.
